# EUROPÄISCHE PATENTANMELDUNG

(11) **EP 0 555 704 A1**
(43) Veröffentlichungstag der Anmeldung: **18.08.1993**
(21) Anmeldenummer: 93101404.7
(22) Anmeldetag: 29.01.1993
(51) Int. Cl.: G01F 1/66

(54) **Vorrichtung zur Leitung eines Gasstromes für einen Gaszähler**

(30) Priorität: 13.02.1992 DE 9201844 U
(71) Anmelder: SIEMENS AKTIENGESELLSCHAFT, D-80333 München (DE)
(72) Erfinder: Spendel, Karl, Dr., W-8500 Nürnberg 60 (DE); Russwurm, Winfried, Dr., W-8400 Regensburg (DE); von Jena, Alexander, Dr., W-8000 München 2 (DE)

(57) **Zusammenfassung**

Bei der Messung von Gasströmen nach dem Prinzip der Ultraschall-Strömungsmessung tritt das Problem auf, daß das hierzu verwendete Meßrohr mit den Ultraschall-Wandlern durch mit dem Gas mitgeführte Staubpartikel leicht verschmutzt wird. Dadurch bedingte Fehlmessungen sollen möglichst vermieden werden. Außerdem besteht die Aufgabe, die Strömungsmessung unabhängig von Strömungsstörungen zu machen. Erfindungsgemäß wird dies durch eine Vorrichtung zur Leitung eines Gasstromes mit einer Einlaßkammer (1) mit einem Einlaßstutzen (4) und einer Auslaßkammer (3) mit einem Auslaßstutzen (5) erreicht. Beide Kammern (1, 3) sind durch ein Meßrohr (2) zum Gasaustausch verbunden, aber im übrigen gasdicht voneinander getrennt. Die Auslaßkammer (3) wirkt hier zugleich als Labyrinth für ausgangsseitig eingekoppelten Störschall.

## Beschreibung

Die Erfindung betrifft eine Vorrichtung zur Leitung eines Gasstromes für einen Gaszähler.

Zur Messung von Gasströmen wird neben dem altbewährten Balgengaszähler bekanntermaßen auch das Prinzip der Ultraschall-Strömungsmessung verwendet. Zur Ultraschall-Strömungsmessung wird ein Meßrohr eingesetzt, durch das das zu messende Gas geleitet wird. Am Anfang und Ende einer Meßstrecke im Meßrohr sind Ultraschall-Wandler angeordnet, mit denen die Laufzeit eines Ultraschall-Signales in Strömungsrichtung des Gases und dazu entgegengesetzt gemessen wird. Der direkte Einbau eines solchen Meßrohres im Zuge der Rohrleitung für den Gastransport würde den Nachteil mit sich bringen, daß die im Gas unvermeidlich befindlichen Staubpartikel sich an den Sensorflächen der Ultraschall-Wandler absetzen und somit das Meßergebnis verfälschen. Eine derartige direkte Zuführung des Gasstromes zum Meßrohr und Ableitung von diesem ist auch ungünstig, weil die Messung des Gasstromes unter diesen Bedingungen von Strömungsstörungen abhängig wird.

Aus der DE 29 24 561 B1 sind Meßwertgeber zur Bestimmung der Durchflußmenge einer strömenden Flüssigkeit bekannt. Diese weisen zwei großräumige, quaderförmige, Hohlkörper bildende Verteilkammern auf, die durch eine Wand voneinander getrennt sind. Ein als Meßstrecke dienendes Rohr durchstößt die Wand und dringt mit seinen Enden in das Innere der beiden Verteilkammern.

Die Verteilkammern weisen einen Zufluß bzw. einen Wegfluß auf, die in den Verteilkammern entfernt von den Enden des Rohres angeordnet sind. Die Anschlüsse für den Zufluß und den Wegfluß liegen in einer gemeinsamen Achse.

Die zu messende Flüssigkeit durchströmt vom Zufluß her die erste Verteilkammer und dringt an der Stirnseite des Endes in das Rohr, verläßt dieses an seinem anderen Ende, durchströmt die zweite Verteilkammer und gelangt zum Wegfluß. Die Achse des Rohres bildet ein Lot durch die Zentren der Übertragungsflächen je eines Meßwandlers. Die Übertragungsflächen sind direkt der Flüssigkeit ausgesetzt und weisen einen definierten Abstand von der Stirnseite der Rohrenden auf.

Ein solcher Meßwertgeber ist für die Messung von Gasströmen im Hinblick auf die oben erwähnte Verfälschung der Meßergebnisse durch sich an den Übertragungsflächen der Meßwandler absetzende Staubpartikel ungeeignet.

Daher liegt der Erfindung die Aufgabe zugrunde, eine Vorrichtung zur Leitung eines Gasstromes für einen Gaszähler zu schaffen, mit der die Verschmutzung des Meßrohrs durch mitgeführten Staub weitgehend vermieden wird und die Strömungsmessung unabhängig von Strömungsstörungen ist. Diese Aufgabe wird erfindungsgemäß erreicht durch eine Vorrichtung zur Leitung eines Gasstromes für einen Gaszähler mit einer Einlaßkammer mit einem Einlaßstutzen, einer Auslaßkammer mit einem Auslaßstutzen und mit einem Meßrohr. Hiermit ergibt sich der Vorteil, daß die Auslaßkammer als Labyrinth für ausgangsseitig eingekoppelten Störschall wirkt und der Staub, der trotz Ausbildung der Kammern in den Ultraschall-Meßkanal eingeleitet wird, von den Ultraschall-Wandlern gut abgehalten wird. Weiterhin zeichnet sich die Vorrichtung durch besonders einfache Herstellung aus. Die Bildung der beiden Kammern durch ein Doppelkammer-Gehäuse beansprucht nur wenig Raum. Gemäß einer vorteilhaften Ausgestaltung der Erfindung weist das Doppelkammer-Gehäuse ein Unterteil mit Einlaß- und Auslaßstutzen, an die eine Rohrleitung anschließbar ist, und einen Deckel auf, in dem das Meßrohr gehalten ist. Um Fehlmessungen zu vermeiden, die in betrügerischer Absicht durch Schalleinkopplung über den Auslaßstutzen denkbar wären, ist es günstig, wenn der Gaseinlaß und der Gasauslaß an den Enden des Meßrohres von dem Ein- bzw. Auslaßstutzen der Kammern wegweist. Durch die verschlungene Führung des Gasstromes bei dieser Ausführungsform wird zudem der Staubausfall begünstigt.

In der Zeichnung ist ein Ausführungsbeispiel der Erfindung dargestellt, das im folgenden näher beschrieben ist.

Es zeigen:
- FIG 1: eine Vorrichtung zur Leitung eines Gaststromes mit zwei getrennten Kammern,
- FIG 2: die Innenansicht eines Unterteils eines Doppelkammer-Gehäuses mit Ein- und Auslaßstutzen,
- FIG 3: einen Deckel eines Doppelkammer-Gehäuses mit einem Meßrohr.

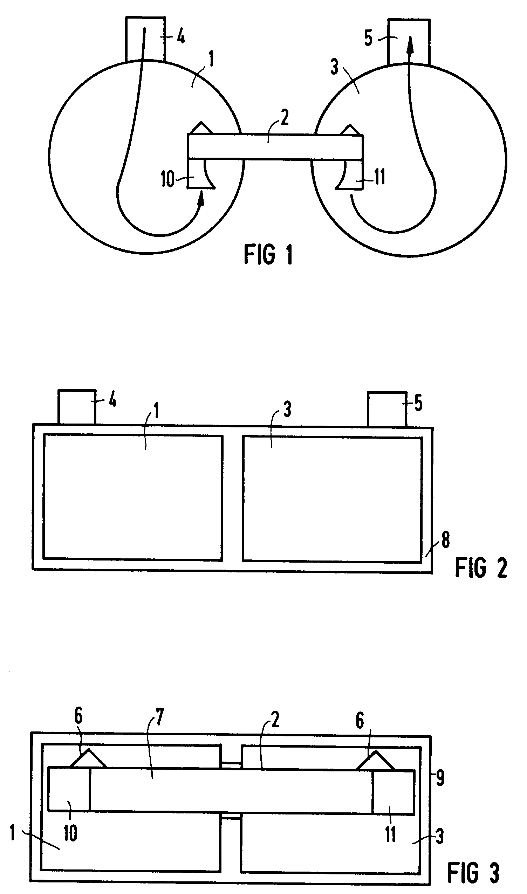

In FIG 1 ist eine Einlaßkammer 1 mit einem Einlaßstutzen 4 sowie eine davon getrennte Auslaßkammer 3 mit einem Auslaßstutzen 5 dargestellt. Die beiden Kammern 1, 3 können hinsichtlich ihrer Raumform unterschiedlich gestaltet sein. Zwischen beiden Kammern 1, 3 besteht als einzige Verbindung zum Gasaustausch ein Meßrohr 2. Die beiden Kammern 1, 3 bilden hierbei ein Puffervolumen, welches als Rückhaltezone für im Gas mitgeführten Staub wirkt. Die innerhalb der Einlaßkammer 1 erheblich reduzierte Strömungsgeschwindigkeit läßt mitgeführte Staubpartikel ausfallen. Zugleich wird durch das Puffervolumen die Auswirkung eingangsseitiger Strömungsstörungen auf das Meßergebnis unterdrückt. Die Auslaßkammer 3 wirkt dabei als Labyrinth für ausgangsseitig eingekoppelten Störschall. Dies bedeutet, daß Betrugsabsichten zur Überlistung des Gaszählers durch Ultraschall-Einkopplung vereitelt werden.

FIG 1 zeigt weiterhin, daß der Gaseinlaß 10 bzw. Gasauslaß 11 an den Enden des Meßrohres von dem Ein- 4 bzw. Auslaßstutzen 5 der beiden Kammern 1, 3 wegweist. Diese nicht geradlinige Strömungsführung des Gases stellt eine weitere Maßnahme für den Staubausfall dar. Die Bereitstellung der vorgenannten Einlaßkammer 1 erlaubt zudem, bei Messung von stark staubhaltigen Gasen im Innenraum der Kammer an geeigneter Stelle ein Staubfilter einzusetzen.

In FIG 2 ist ein Unterteil 8 eines Doppelkammer-Gehäuses mit Einlaß- 4 und Auslaßstutzen 5 dargestellt. Der Hohlraum des Unterteils 8 ist durch eine Trennwand zur Bildung der beiden Kammern 1, 3 unterteilt.

FIG 3 zeigt einen Deckel 9 eines Doppelkammer-Gehäuses mit einem Meßrohr 2, welches an den Enden seines Ultraschall-Meßkanals 7 mit Ultraschall-Wandlern 6 versehen ist. Die beiden Ultraschall-Wandler 6 sind so angeordnet, daß noch etwa in den Meßkanal gelangender Reststaub aufgrund der Gravitation sich nicht auf den Sensorflächen der Ultraschall-Wandler 6 absetzt.

Das aus dem Unterteil 8 und dem Deckel 9 zusammengesetzte Gehäuse beansprucht vorteilhafterweise nur ein Drittel des Volumens eines Balgengaszählers und läßt sich an die zum Gasanschluß üblicherweise verwendete Standardkonfiguration, d.h. an die U6-Anordnung für Gaszähler verwenden.

## Patentansprüche

1. Vorrichtung zur Leitung eines Gasstromes für einen Gaszähler mit einer Einlaßkammer (1) mit einem Einlaßstutzen (4), einer Auslaßkammer (3) mit einem Auslaßstutzen (5) und mit einem Meßrohr (2), das die beiden durch ein Doppelkammer-Gehäuse (8, 9) gebildeten und gasdicht voneinander getrennten Kammern (1, 3) zum Gasaustausch verbindet und das horizontal angeordnet ist und als Ultraschall-Strömungsmesser mit Ultraschall-Wandlern (6) ausgeführt ist, die auf der in Gegenrichtung des Gravitationsfeldes befindlichen Seite des Ultraschall-Meßkanals (7) vom Meßrohr (2) liegen.

2. Vorrichtung nach einem der vorangehenden Ansprüche, **dadurch gekennzeichnet,** daß das Doppelkammer-Gehäuse ein Unterteil (8) mit Einlaß- (4) und Auslaßstutzen (5), an die eine Rohrleitung anschließbar ist, und einen Deckel (9) aufweist, in dem das Meßrohr (2) gehalten ist.

3. Vorrichtung nach einem der vorangehenden Ansprüche, **dadurch gekennzeichnet,** daß der Gaseinlaß (10) bzw. der Gasauslaß (11) an den Enden des Meßrohres (2) von dem Ein- (4) bzw. Auslaßstutzen (5) der Kammern (1, 3) wegweist.
